# EUROPEAN PATENT SPECIFICATION

(11) **EP 2 063 225 B1**
(45) Date of publication and mention of the grant of the patent: **26.10.2011**
(21) Application number: 07022522.2
(22) Date of filing: 20.11.2007
(51) Int. Cl.: G01C 21/00, G01C 21/20, G01C 21/26, H04H 20/53, G08G 1/09, H04B 1/08

(54) **Car radio, navigation radio, navigation device, and navigation-radio-system**
Autofunkgerät, Navigationsfunkgerät, Navigationsvorrichtung und Navigationsfunksystem
Dispositif d'autoradio, radionavigation et de navigation et système de radionavigation

(43) Date of publication of application: 27.05.2009
(73) Proprietor: Continental Automotive GmbH, 30165 Hannover (DE)
(72) Inventor: Chia, Wei Ming, 570126 Singapore (SG); Lim, Chuan Hock, 169483 Singapore (SG)

(56) References cited:
- DE-A1- 19 854 126
- DE-A1- 19 943 600
- JP-A- 2006 308 468
- US-A- 5 627 547

## Description

The invention relates to a car radio, a navigation radio, a navigation device, and a navigation-radio-system. The car radio comprises a housing of the car radio. The navigation radio comprises the car radio. The navigation device comprises a housing of the navigation device. The navigation-radio-system comprises the navigation device.

US 5,339,362 discloses a modular automotive audio system which is formed for being mounted within a vehicle trunk and a remote control for use within the passenger compartment.

US 5,627,547 A discloses a car radio with an integrated navigation system. The car radio comprises a slot for a navigation memory card. The navigation memory card contains route and/or geographic information used by the integrated navigation system.

DE 198 54 126 A1 discloses a navigation processor that is electrically coupled to a car radio. The car radio comprises memory devices for storing route and/or predetermined destination information used by the navigation processor.

DE 199 43 600 A1 discloses a navigation device with an integrated navigation system and an integrated radio unit. The radio unit comprises card reading means for reading a key-card. The key-card is used to provide an operation state of the radio unit. The key card is further used to store route and/or destination information used by the navigation system.

JP 2006308468 discloses a navigation device with a card slot for cards. The navigation device is applicable to acquire traffic and/or route information if the card is arranged in the card slot of the navigation device.

The object of the invention is to create a car radio, a navigation radio, a navigation device and/or a navigation-radio-system, which easily enable the integration of navigation functionalities into a car radio and/or of radio functionalities into a navigation device.

The object is achieved by the features of independent claims 1, 2, 3, and 4. Advantageous embodiments are given in the sub-claims.

The invention is distinguished concerning a first aspect by a car radio comprising a housing of the car radio. The housing of the car radio comprises a manual control element of the car radio and has a slot of the car radio for a navigation unit. The car radio comprises an interface of the car radio which is formed and arranged in such a way that the navigation unit is connected to the car radio via the interface of the car radio, if the navigation unit is arranged in the slot of the car radio.

This easily enables the integration of navigation functionalities by arranging the navigation unit in the slot of the car radio. Further, this enables to only provide a single slot and a single interface for the car radio in the motor vehicle. This may contribute to a low cost production of the motor vehicle and to a high flexibility for a motor vehicle buyer.

The invention is distinguished concerning a second aspect by a navigation radio comprising the car radio and a navigation unit for the car radio. The navigation unit has a housing of the navigation unit and an interface of the navigation unit which are formed and arranged in such a way that the navigation unit is connected to the car radio via the interface of the navigation unit, if the navigation unit is arranged in the slot of the car radio.

The invention is distinguished concerning a third aspect by a navigation device comprising a housing of the navigation device. The housing of the navigation device comprises a manual control element of the navigation device and has a slot of the navigation device for a radio unit. The navigation device comprises an interface of the navigation device which is formed and arranged in such a way that the radio unit is connected to the navigation device via the interface of the navigation device, if the radio unit is arranged in the slot of the navigation device.

This easily enables to integrate radio functionalities into the navigation device. Further, this enables to only arrange the interface for the navigation device and the slot for the navigation device in the motor vehicle, while having the possibility to integrate the radio unit later. This may contribute to a low-cost production of the motor vehicle while providing a high flexibility to the motor vehicle buyer.

The invention is distinguished concerning a fourth aspect by a navigation-radio-system. The navigation-radio-system comprises the navigation device and the radio unit for the navigation device. The radio unit has a housing of the radio unit and an interface of the radio unit which are formed and arranged in such a way that the radio unit is connected to the navigation device via the interface of the radio unit, if the radio unit is arranged in the slot of the navigation device.

Embodiments of the invention are explained in the following with the help of schematic drawings.

These are as follows:
- figure 1: a first embodiment of a navigation radio,
- figure 2: a second embodiment of the navigation radio,
- figure 3: a block diagram of the navigation radio without the navigation unit,
- figure 4: a block diagram of the navigation radio with the navigation unit.

Elements of the same design or function that appear in the different illustrations are identified by the same reference characters.

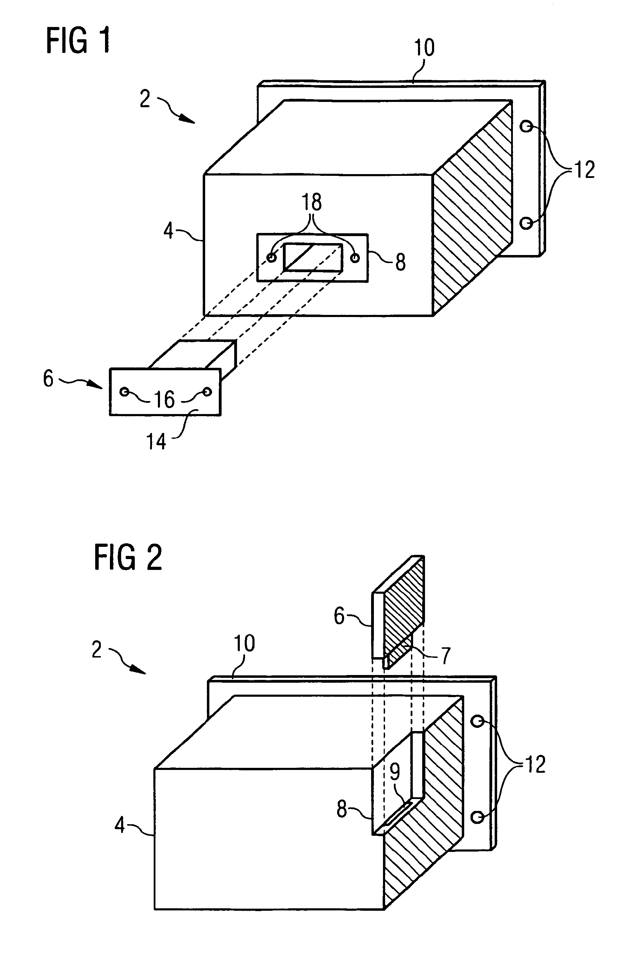

A navigation radio 2 (figure 1) comprises a car radio 4 and a navigation unit 6. The car radio 4 comprises a slot 8 of the car radio 4 in which an interface (figure 2) of the car radio 4 for the navigation unit 6 is arranged. The slot 8 of the car radio 4 and the interface of the car radio 4 for the navigation unit 6 are arranged in such a way that the navigation unit 6 is connected to the car radio 4 if the navigation unit 6 is arranged in the slot 8 of the car radio 4.

Further, the car radio 4 may comprise a facing 10 of the car radio which may comprise recesses 12 of the facing 10 of the car radio 4 for fixing the car radio 4 into a dashboard of a motor vehicle. On a front side of the car radio 4, which is not illustrated in the figures, the car radio 4 comprises a manual control element for controlling the car radio 4 and the navigation unit 6, if the navigation unit 6 is arranged in the slot 8 of the car radio 4.

The navigation unit 6 comprises an interface 7 (figure 2) of the navigation unit 6 for connecting the navigation unit 6 to the interface of the car radio 4. Further, the navigation unit may comprise a facing 14 of the navigation unit 6. The facing 14 of the navigation unit 6 may comprise recesses 16 of the facing 14 of the navigation unit 6 for fixing the navigation unit 6 into the slot 8 of the car radio 4.

If the navigation unit 6 is not arranged in the slot 8 of the car radio 4, the navigation radio 2 only has the functionality of a normal radio. If the navigation unit 6 is properly arranged in the slot 8 of the car radio 4, the navigation radio 2 additionally has the navigation functionalities of a navigation system.

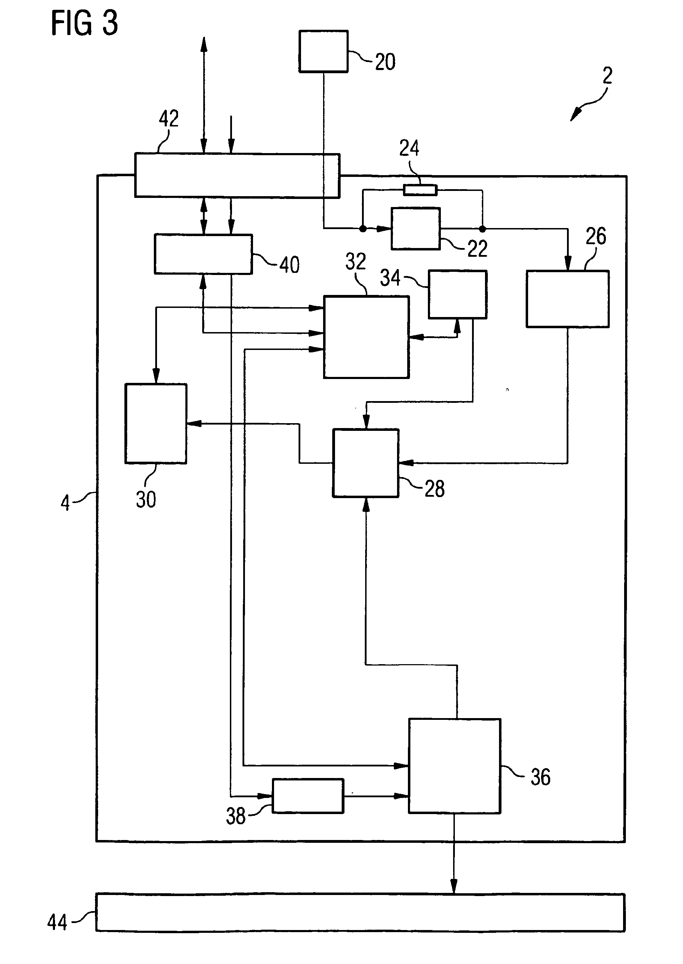

The navigation radio 2 further comprises a connector block 42 (figure 3) for connection the navigation radio 2 to the motor vehicle, in particular to a radio antenna 20 of the motor vehicle, to a power supply of the motor vehicle, and/or to speakers of the motor vehicle. The connector block 42 may consist of more than one physical connector.

Alternatively, the slot 8 of the car radio 4 may be arranged on a side of the housing of the car radio 4 (figure 2).

Alternatively, the combination of the radio functionalities and the navigation functionalities may be realized by a stand-alone navigation device which may be arranged in the dashboard of the motor vehicle. The navigation device comprises a housing of the navigation device. The housing of the navigation device comprises a manual control element of the navigation device and a slot of the navigation device for a radio unit. The radio unit has a housing of the radio unit and an interface of the radio unit which are formed and arranged in such a way that the radio unit is connected to the navigation device via the interface of the radio unit if the radio unit is arranged in the slot of the navigation device. Then, firstly the navigation device may be arranged in the dashboard of the motor vehicle and the radio unit may be removed from the navigation device or may be installed later.

A navigation-radio-system comprising the navigation device and the radio unit may has the same functionalities like the navigation radio comprising the car radio and the navigation unit.

The radio antenna 20 (figure 3) of the motor vehicle may be connected to an antenna splitter 22 via the connector block 42 which represents a interface of the car radio 4 for connecting the car radio 4 to the motor vehicle. The antenna splitter 22 enables to split a radio signal in two signals. If the navigation unit 6 is not arranged in the car radio 4, the antenna splitter 22 only sends the radio signal to a tuner 26. Then, the antenna splitter 22 may provide a resistant 24. The tuner 26 may be connected to a sound processor 28. The sound processor 28 provides a signal for a power amplifier 30. The power amplifier 30 may be connected to a car radio processor 32 which may be connected to a drive 34. The drive 34 may be connected to the sound processor 28. An entertainment processor 36 may provide a signal for the sound processor 28 and may be connected to a video processor 38 and an interface circuit 40. The interface circuit 40 is connected to the connector block 42. The car radio 4 preferably further comprises a display 44.

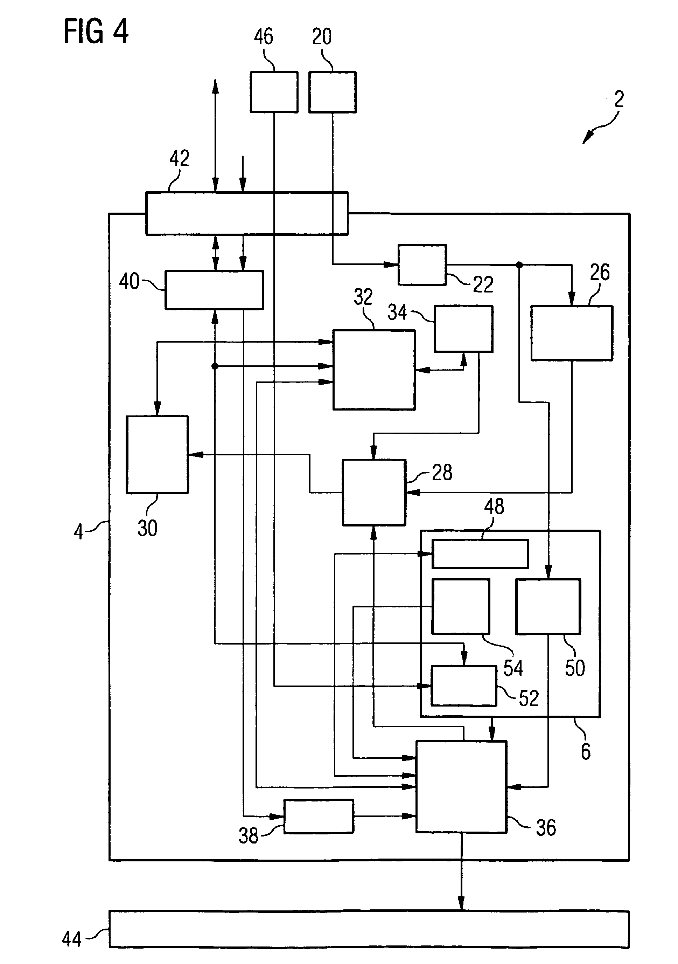

If the navigation unit 6 is arranged in the slot 8 of the car radio 4 (figure 4), the antenna splitter 22 may provide the radio signal for a TMC tuner 50. The TMC tuner 50 may be connected to the entertainment processor 36. The entertainment processor 36 may be further connected to an accelerometer 48 and/or to a gyroscope 54. Preferably, a GPS unit 52 is further connected to a GPS antenna 46.

### Reference numerals:

- 2: navigation radio
- 4: car radio
- 6: navigation unit
- 7: interface navigation unit
- 8: slot car radio
- 9: interface car radio
- 10: facing car radio
- 12: recess facing car radio
- 14: facing navigation unit
- 16: recess facing navigation unit
- 18: rear recess car radio
- 20: radio antenna
- 22: antenna splitter
- 24: resistance
- 26: tuner
- 28: sound processor
- 30: power amplifier
- 32: car radio processor
- 34: drive
- 36: entertainment processor
- 38: video processor
- 40: interface circuit
- 42: connector block
- 44: display
- 46: GPS antenna
- 48: accelerometer
- 50: TMC tuner
- 52: GPS unit
- 54: gyroscope

## Claims

1. Car radio (4) comprising a housing of the car radio (4), which comprises a manual control element of the car radio (4) **characterised by** a slot (8) of the car radio (4) for a navigation unit (6), and comprising an interface (9) of the car radio (4) which is formed and arranged in such a way that the navigation unit (6) is connected to the car radio (4) via the interface (9) of the car radio (4), if the navigation unit (6) is arranged in the slot (9) of the car radio (4).

2. Navigation radio (2) comprising the car radio (4) according to claim 1 **characterised by** a navigation unit (6) for the car radio (4) which has a housing of the navigation unit (6) and an interface (7) of the navigation unit (6) which are formed and arranged in such a way that the navigation unit (6) is connected to the car radio (4) via the interface (7) of the navigation unit (6), if the navigation unit (6) is arranged in the slot (8) of the car radio (4).

3. Navigation device comprising a housing of the navigation device, which comprises a manual control element of the navigation device **characterised by** a slot of the navigation device for a radio unit, and comprising an interface of the navigation device which is formed and arranged in such a way that the radio unit is connected to the navigation device via the interface of the navigation device, if the radio unit is arranged in the slot of the navigation device.

4. Navigation-Radio-System comprising the navigation device according to claim 3 **characterised by** a radio unit for the navigation device which has a housing of the radio unit and an interface of the radio unit which are formed and arranged in such a way that the radio unit is connected to the navigation device via the interface of the radio unit, if the radio unit is arranged in the slot of the navigation device.

## Patentansprüche

1. Autoradio (4) mit einem Gehäuse des Autoradios (4), das ein manuelles Steuerelement des Autoradios (4) umfasst, **gekennzeichnet durch** einen Schlitz (8) des Autoradios (4) für eine Navigationseinheit (6) und mit einer Schnittstelle (9) des Autoradios (4), die so ausgebildet und angeordnet ist, dass die Navigationseinheit (6) über die Schnittstelle (9) des Autoradios (4) mit dem Autoradio (4) verbunden ist, wenn die Navigationseinheit (6) im Schlitz (9) des Autoradios (4) angeordnet ist.

2. Navigationsradio (2) mit dem Autoradio (4) nach Anspruch 1, **gekennzeichnet durch** eine Navigationseinheit (6) für das Autoradio (4), die ein Gehäuse der Navigationseinheit (6) und eine Schnittstelle (7) der Navigationseinheit (6) hat, die so ausgebildet und angeordnet sind, dass die Navigationseinheit (6) über die Schnittstelle (7) der Navigationseinheit (6) mit dem Autoradio (4) verbunden ist, wenn die Navigationseinheit (6) im Schlitz (8) des Autoradios (4) angeordnet ist.

3. Navigationsvorrichtung mit einem Gehäuse der Navigationsvorrichtung, das ein manuelles Steuerelement der Navigationsvorrichtung umfasst, **gekennzeichnet durch** einen Schlitz der Navigationsvorrichtung für eine Radioeinheit und mit einer Schnittstelle der Navigationsvorrichtung, die ausgebildet und angeordnet ist, dass die Radioeinheit über die Schnittstelle der Navigationsvorrichtung mit der Navigationsvorrichtung verbunden ist, wenn die Radioeinheit im Schlitz der Navigationsvorrichtung angeordnet ist.

4. Navigationsradiosystem mit der Navigationsvorrichtung nach Anspruch 3, **gekennzeichnet durch** eine Radioeinheit für die Navigationsvorrichtung, die ein Gehäuse der Radioeinheit und eine Schnittstelle der Radioeinheit hat, die ausgebildet und angeordnet sind, dass die Radioeinheit über die Schnittstelle der Radioeinheit mit der Navigationsvorrichtung verbunden ist, wenn die Radioeinheit im Schlitz der Navigationsvorrichtung angeordnet ist.

## Revendications

1. Autoradio (4) comprenant un boîtier de l'autoradio (4), qui comprend un élément de commande manuel de l'autoradio (4), **caractérisé par** une fente (8) de l'autoradio (4) pour une unité (6) de navigation, et comprenant une interface (9) de l'autoradio (4) qui est formée et disposée de manière à ce que l'unité (6) de navigation soit reliée à l'autoradio (4) par l'intermédiaire de l'interface (9) de l'autoradio (4) si l'unité (6) de navigation est mise dans la fente (9) de l'autoradio (4).

2. Radionavigation (2) comprenant l'autoradio (4) suivant la revendication 1, **caractérisée par** une unité (6) de navigation pour l'autoradio (4) qui a un boîtier de l'unité (6) de navigation et une interface (7) de l'unité (6) de navigation qui sont formées et disposées de manière à ce que l'unité (6) de navigation soit reliée à l'autoradio (4) par l'intermédiaire de l'interface (9) de l'autoradio (4) si l'unité (6) de navigation est mise dans la fente (9) de l'autoradio (4).

3. Dispositif de navigation comprenant un boîtier du dispositif de navigation, qui comprend un élément de commande manuel du dispositif de navigation, **caractérisé par** une fente du dispositif de navigation pour une unité de radio, et comprenant une interface du dispositif de navigation qui est formée et disposée de telle manière que l'unité de radio soit reliée au dispositif de navigation par l'intermédiaire de l'interface du dispositif de navigation, si l'unité de radio est mise dans la fente du dispositif de navigation.

4. Système de radionavigation comprenant le dispositif de navigation suivant la revendication 3, **caractérisé par** une unité de radio pour le dispositif de navigation qui a un boîtier de l'unité de radio et une interface de l'unité de radio qui sont formés et disposés de manière à ce que l'unité de radio soit reliée au dispositif de navigation par l'intermédiaire de l'interface de l'unité de radio, si l'unité de radio est mise dans la fente du dispositif de navigation.
